(19) Europäisches Patentamt
European Patent Office
Office européen des brevets

(11) EP 4 282 898 B1

(12) **EUROPEAN PATENT SPECIFICATION**

(45) Date of publication and mention of the grant of the patent:
**07.08.2024 Bulletin 2024/32**

(21) Application number: **22305779.5**

(22) Date of filing: **25.05.2022**

(51) International Patent Classification (IPC):
***C08G 63/692*** *(2006.01)* ***C08G 63/695*** *(2006.01)*
***C08G 63/91*** *(2006.01)* ***C08G 77/30*** *(2006.01)*
***C09D 167/08*** *(2006.01)*

(52) Cooperative Patent Classification (CPC):
**C08G 63/6956; C08G 63/6926; C08G 63/6928; C08G 63/6958; C08G 63/916; C08G 63/918; C09D 167/08**

(54) **COVALENTLY GRAFTED ALKYD RESIN WITH FLAME RETARDANT PROPERTIES FOR COATING APPLICATIONS**

KOVALENT GEPFROPFTES ALKYDHARZ MIT FLAMMHEMMENDEN EIGENSCHAFTEN FÜR BESCHICHTUNGSANWENDUNGEN

RÉSINE ALKYDE GREFFÉE DE MANIÈRE COVALENTE AVEC DES PROPRIÉTÉS IGNIFUGES POUR DES APPLICATIONS DE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.11.2023 Bulletin 2023/48**

(73) Proprietors:
- **Université de Montpellier**
  **34090 Montpellier (FR)**
- **Centre National de la Recherche Scientifique (CNRS)**
  **75016 Paris (FR)**
- **Ecole Nationale Supérieure de Chimie de Montpellier**
  **34296 Montpellier Cedex 5 (FR)**
- **UNIVERSITE DE MONTPELLIER**
  **34090 Montpellier (FR)**

(72) Inventors:
- **DENIS, Maxinne**
  **34090 MONTPELLIER (FR)**
- **FAHY, Olivier**
  **33290 BLANQUEFORT (FR)**
- **LE BORGNE, Damien**
  **33290 BLANQUEFORT (FR)**
- **NEGRELL, Claire**
  **34090 MONTPELLIER (FR)**
- **CAILLOL, Sylvain**
  **34090 MONTPELLIER (FR)**

(74) Representative: **Plasseraud IP**
**66, rue de la Chaussée d'Antin**
**75440 Paris Cedex 09 (FR)**

(56) References cited:
**CN-A- 103 333 327** **CN-A- 112 724 385**
**US-A- 5 494 993** **US-B2- 9 527 956**

- **LICHUN WANG ET AL: "Synthesis, characteristic of a novel flame retardant containing phosphorus, silicon and its application in ethylene vinyl-acetate copolymer (EVM) rubber", JOURNAL OF POLYMER RESEARCH, KLUWER ACADEMIC PUBLISHERS-CONSULTANTS BUREAU, NL, vol. 17, no. 6, 4 February 2010 (2010-02-04), pages 891 - 902, XP019824741, ISSN: 1572-8935**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 282 898 B1

## Description

### Technical Field

The present invention relates to alkyd resins and to flame retardant paint compositions.

### Background Art

Alkyd resins were developed in the mid-1920s and have been widely used as binders in paint compositions for the coating industry from the 1930s. The raw materials used for the synthesis of alkyd resins are mainly based on renewable resources, which is of great interest due to the current rise in environmental concerns. However, alkyd resins are easily flammable due to high carbon and hydrogen contents. Therefore, flame retardant additives are usually incorporated into alkyd resins in order to reduce the risk associated with their flammability.

Halogen-containing compounds are commonly incorporated as flame retardants into alkyd resins, more particularly brominated substances whose combustion emits corrosive and toxic fumes. Consequently, the use of these brominated substances is limited by European regulations and more friendly alternatives must be developed.

Therefore, halogen-free flame retardants have attracted increasing attention in recent years. For example, silicone-containing compounds are known for their thermal stability and are used as "environmentally friendly" flame retardants without release of toxic fumes. Organophosphorus compounds, in particular phosphinate compounds, are another example of flame retardants that have also been studied for their flame retardant properties and they are considered as a potential alternative to halogen-containing compounds. CN 103 333 327 A discloses flame retardant alkyd resins.

However, it is known that migration and leaching of silicone-containing compounds and organophosphorus compounds, in particular phosphinate compounds occur after exposure of the alkyd resin to a high temperature or humid atmosphere. Therefore, the flame retardancy properties of the alkyd resin comprising silicone-containing compounds and organophosphorus compounds may be unsatisfactory.

Therefore, there is a need to provide a flame retardant that overcome these problems.

Surprisingly, the Inventors have developed an alkyd resin having flame retardancy properties that meets this need.

### Summary

In one aspect, it is proposed an alkyd resin covalently grafted with silicon oligomers substituted with a phosphorus-containing substituent,
wherein

the mass percentage of silicon oligomers substituted with a phosphorus-containing substituent covalently grafted on the alkyd resin is 1 wt% to 40 wt%, in particular 5 wt% to 35 wt%, more particularly 10 wt% to 30 wt % with respect to the total weight of the alkyd resin,
the atomic ratio silicon:phosphorus of the silicon oligomers substituted with a phosphorus-containing substituent is comprised between 2:1 and 1:2, in particular 1.5:1 and 1 :1.5, more particularly is 1:1, and
the number average molecular weight (Mn) of the alkyd resin is comprised between 2 000 $g.mol^{-1}$ and 8 000 $g.mol^{-1}$, in particular between 5 500 $g.mol^{-1}$ and 6 500 $g.mol^{-1}$.

Advantageously, the flame retardancy properties of a paint composition comprising the grafted alkyd-resin of the present invention are better than the flame retardancy properties of a paint composition comprising a conventional alkyd-resin.

Without wishing to be bound by any theory, the Inventors are of the opinion that the improved flame retardancy properties are due to:

- the mass percentage of substituted silicon oligomers covalently grafted on the alkyd resin of the present invention, and
- the length of the substituted silicon oligomers. The skilled person knows that this length is characterized by the atomic ratio and the number average molecular weight (Mn) of the alkyd resin of the present invention. Indeed, the substituted silicon oligomer consists of several variable monomers units and its Si/P ratio depends on the total or partial functionalization of silicon units as well as the added phosphorus group.

Indeed, the Inventors observed that the flame retardancy properties of the covalently grafted alkyd resin is not improved when the above-mentioned mass percentage is below 1 wt%. The Inventors also observed that the incorporation

of more than 40 wt% of substituted silicon oligomers into alkyd resin leads to an unwanted phase separated product. The skilled person knows how to adapt to this mass percentage when synthesizing the covalently grafted alkyd resin of the present invention.

The length of the substituted silicon oligomers, comprised between 2 and 20 units, is small and may promote compatibility with alkyd resin, may promote the conservation of mechanical properties and may also ensure a favorable flame retardant response of the paint composition comprising the grafted alkyd resin of the present invention. Furthermore, to have a good homogeneity of the new formed compound substituted silicon oligomers with a small length and a favorable molar carbon ratio are required.

Moreover, the covalent grafting creates a durable chemical bound between the substituted silicon oligomers and the alkyd resin while they are incompatible compounds. Therefore, the covalent grafting enables to maintains the flame retardancy properties of the paint composition comprising the covalently grafted alkyd-resin of the present invention over time.

The covalently grafted alkyd resin of the present invention is also an "environmentally friendly" flame retardant since the raw materials used for the synthesis of alkyd resins are based on renewable resources and since it does not produce corrosive and toxic fumes during combustion.

In another aspect, it is proposed a process for producing the covalently grafted alkyd resin of the present invention as defined above comprising the following steps:

a) contacting a phosphorous compound with a silane compound to produce silicon oligomers substituted with a phosphorus-containing substituent, and
b) contacting a polyol, an acid anhydride and a fatty acid to produce an alkyd resin, and
c) contacting the silicon oligomers produced in step a) with the alkyd resin produced in step b) to produce the covalently grafted alkyd resin,

wherein the acid anhydride is phthalic anhydride, maleic anhydride or mixtures thereof, in particular a mixture of phthalic anhydride and maleic anhydride.

In another aspect, it is proposed a flame retardant paint composition comprising the covalently grafted alkyd resin of the present invention as defined above.

In another aspect, it is proposed the use of the flame retardant paint composition of the present invention in fire protection.

**Description of Embodiments**

In one aspect, it is proposed an alkyd resin covalently grafted with silicon oligomers substituted with a phosphorus-containing substituent,
wherein

the mass percentage of silicon oligomers substituted with a phosphorus-containing substituent covalently grafted on the alkyd resin is 1 wt% to 40 wt%, in particular 5 wt% to 35 wt%, more particularly 10 wt% to 30 wt % with respect to the total weight of the alkyd resin,
the atomic ratio silicon:phosphorus of the silicon oligomers substituted with a phosphorus-containing substituent is comprised between 2:1 and 1:2, in particular 1.5:1 and 1 :1.5, more particularly is 1:1, and
the number average molecular weight (Mn) of the alkyd resin is comprised between 2 000 $g.mol^{-1}$ and 8 000 $g.mol^{-1}$, in particular between 5 500 $g.mol^{-1}$ and 6 500 $g.mol^{-1}$.

As used herein, the term "alkyd resin" refers to a resin obtained by condensing polybasic carboxylic acids and polyhydric alcohols, these compounds generally being modified with long-chain alcohols (fatty alcohols), fatty acids or vegetable oils.
In the present application, "alkyd resin covalently grafted with silicon oligomers substituted with a phosphorus-containing substituent" may also be referred as "covalently grafted alkyd resin".

As used therein, the expression "silicon oligomers substituted with a phosphorus-containing substituent" refers to an inorganic silicon-oxygen backbone chain

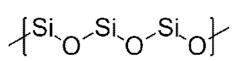

with one alkyl group covalently bound to each silicon center and one phosphorus-containing substituent also covalently

bound, by a phosphorus atom and *via* $-CH_2-CH_2-$, to the silicon center.
In the present application, "silicon oligomers substituted with a phosphorus-containing substituent" may also be referred as "substituted silicon oligomers".

The covalently grafted alkyd resin may have the following formula (A):

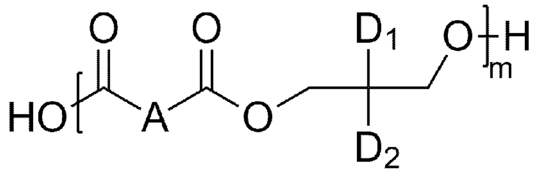

(A)

wherein

m is an integer,
A is

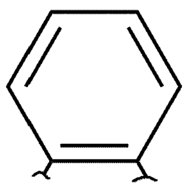

or -CH=CH-,
$D_1$ is $-OR_3$ or $-CH_2-OR_3$, in particular $-CH_2-OR_3$,
$D_2$, independently from $D_1$, is -H, $-CH_2-CH_3$, $-OR_3$ or $-CH_2-OR_3$, in particular, $-CH_2-OR_3$, and
$R_3$ is independently chosen among -H, the substituted silicon oligomers and a derivative of a fatty acid.

In the above formula (A):

- m represents the average degree of polymerization of the alkyd resin and depends of the number average molecular weight (Mn) of the covalently grafted alkyd resin, and
- $R_3$ is such that 1 wt% to 40 wt% with respect to the total weight of the alkyd resin is silicon oligomers substituted with a phosphorus-containing substituent, in particular 5 wt% to 35 wt%, more particularly 10 wt% to 30 wt %.

When A is -CH=CH-, the -CH=CH- motif is preferably in a cis configuration.

According to a particular embodiment, the covalently grafted alkyd resin may have the following formula (B):

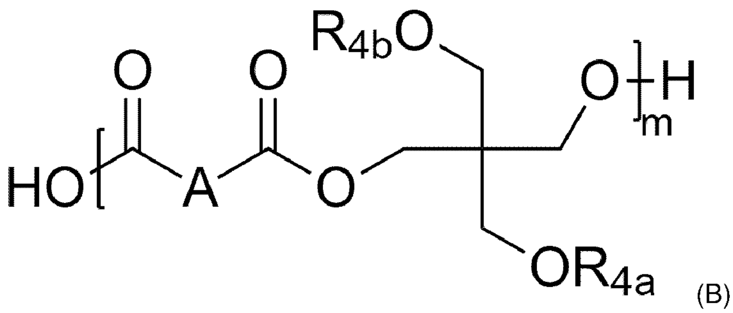

(B)

wherein

m is an integer,
A is

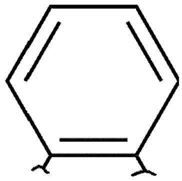

or -CH=CH-, and

$R_{4a}$ and $R_{4b}$ are, independently from each other, chosen among -H, the substituted silicon oligomers and a derivative of a fatty acid.

In the above formula (B):

- m represents the average degree of polymerization of the alkyd resin and depends of the number average molecular weight (Mn) of the covalently grafted alkyd resin, and
- $R_{4a}$ and $R_{4b}$ are such that 1 wt% to 40 wt% with respect to the total weight of the alkyd resin is silicon oligomers substituted with a phosphorus-containing substituent, in particular 5 wt% to 35 wt%, more particularly 10 wt% to 30 wt %.

The substituted silicon oligomers of the covalently grafted alkyd resin of the present invention may have the following formula (1):

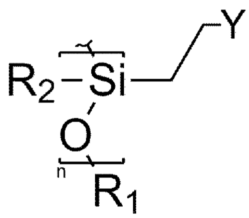

(1)

wherein

$R_1$ is H or a $C_1$-$C_6$ alkyl, in particular H, methyl or ethyl, more particularly H or methyl,
$R_2$ is a $C_1$-$C_6$ alkyl, in particular $C_1$-$C_4$ alkyl, more particularly methyl,
n is an integer between 2 and 20, in particular 2, 3 or 4, more particularly is 4, and
Y has one of the following formula (2a) or (2b), in particular the formula (2a):

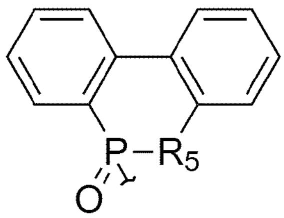

(2a)

wherein $R_5$ is $CH_2$ or O, in particular O,

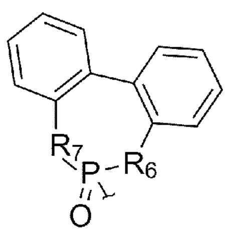

(2b)

wherein $R_6$ and $R_7$ are, independently from each other, $CH_2$ or O, in particular are O.

In the above formula (1), n represents the average degree of polymerization of the substituted silicon oligomers.
The derivative of a fatty acid of the covalently grafted alkyd resin of the present invention may be a derivative of palmitate, stearate, oleate, linoleate, gamma-linoleate or linolenate, in particular a derivative of oleate, linoleate, or gamma-linoleate.
Therefore, in the present invention by "derivative of a fatty acid" it is meant that $-OR_3$, $-OR_{4a}$ and $-OR_{4b}$ are palmitate, stearate, oleate, linoleate, gamma-linoleate or linolenate.
According to a very particular embodiment, in the above formula (B):

A is

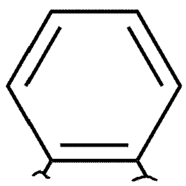

or -CH=CH-,
$R_{4a}$ and $R_{4b}$ are, independently from each other, chosen among:

- the substituted silicon oligomers having the following formula (1):

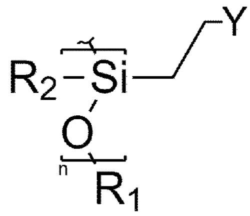

(1)

wherein
$R_1$ is H or methyl,
$R_2$ is methyl,
n is an integer being 2, 3 or 4, more particularly is 4,
Y has the following formula (2a):

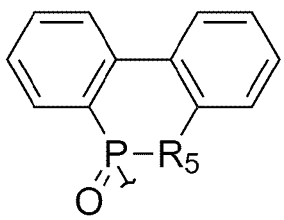

(2a)

wherein $R_5$ is O, and

- the derivative of a fatty acid being a derivative of oleate, linoleate or gamma-linoleate.

The flame retardancy properties of the grafted alkyd-resin of this very particular embodiment are dramatically increased. For example, the peak of heat release rate (pHRR), that is the maximal value of the heat release rate, of the covalently grafted alkyd resin of this very particular embodiment can be more than 50% lower than the pHRR the same alkyd resin but not grafted.
The grafted alkyd-resin of the present invention can be mixed with a solvent, such as water, white spirit, xylene or mixtures thereof, in particular white spirit.

According to another aspect, it is also proposed a process for producing the covalently grafted alkyd resin according to the present invention as defined above comprising the following steps:

a) contacting a phosphorous compound with a silane compound to produce silicon oligomers substituted with a phosphorus-containing substituent, and
b) contacting a polyol, an acid anhydride and a fatty acid to produce an alkyd resin, and
c) contacting the silicon oligomers produced in step a) with the alkyd resin produced in step b) to produce the covalently grafted alkyd resin,

wherein the acid anhydride is phthalic anhydride, maleic anhydride or mixtures thereof, in particular a mixture of phthalic anhydride and maleic anhydride.

Thanks to the process of the present invention, the covalently grafted alkyd resin of the present invention can be easily and rapidly produced at a high yield.

The silane compound may have the following formula (3):

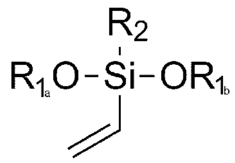

(3)

wherein

$R_{1a}$ and $R_{1b}$ are, independently from each other, H or a $C_1$-$C_6$ alkyl, in particular H, methyl or ethyl, more particularly methyl or ethyl,
$R_2$ is a $C_1$-$C_6$ alkyl, in particular $C_1$-$C_4$ alkyl, more particularly methyl.

According to a particular embodiment, the silane compound is vinylmethyldiethoxysilane, vinylmethyldimethoxysilane (VMDMS) or mixtures thereof, in particular vinylmethyldimethoxysilane.

Advantageously, VMDMS is a very common and cheap compound. Therefore, the covalently grafted alkyd resin of the present invention is not expensive to produce. Moreover, thanks to its double bound C=C, it can easily react with the phosphorous compound to produce the silicon oligomers substituted with a phosphorus-containing substituent.

The phosphorous compound may have the following formula (4a) or (4b), in particular (4a):

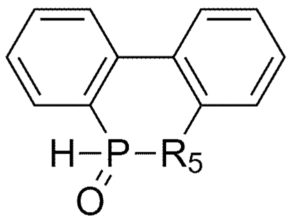

(4a)

wherein $R_5$ is $CH_2$ or O, in particular O,

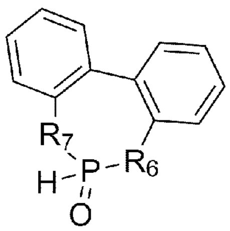

(4b)

wherein $R_6$ and $R_7$ are, independently from each other, $CH_2$ or O, in particular are O.

According to a particular embodiment, the phosphorous compound is 9,10-dihydro-9-oxa-10-phosphaphenanthrene-10-oxide (DOPO).

Advantageously, DOPO exhibits high thermal stability, good oxidation and water resistance. Moreover, thanks to its P-H reactive bond, DOPO can easily react with unsaturated system such as the double bound C=C of the silane compound having the above formula, in particular VMDMS.

According to a very particular embodiment, the substituted silicon oligomers are synthesized from VMDMS and DOPO.

The polyol may be glycerol, trimethylolpropane, pentaerythritol or mixtures thereof, in particular pentaerythritol.

The fatty acid be palmitic acid, stearic acid, oleic acid, linoleic acid, gamma-linoleic acid, linolenic acid or mixtures thereof, in particular oleic acid, linoleic acid, gamma-linoleic acid or mixtures thereof.

According to a very specific embodiment, in the process of the present invention:

the acid anhydride is a mixture of phthalic anhydride and maleic anhydride,
the silane compound is VMDMS,
the phosphorous compound is DOPO,
the polyol is pentaerythritol, and
the fatty acid is oleic acid, linoleic acid, gamma-linoleic acid or mixtures thereof.

The flame retardancy properties of the grafted alkyd-resin of the present invention produced according to this very specific embodiment are dramatically increased. For example, the peak of heat release rate (pHRR), that is the maximal value of the heat release rate, of the covalently grafted alkyd resin of this very particular embodiment can be more than 50% lower than the pHRR the same alkyd resin but not grafted.

Steps a), b) and c) may be performed under stirring. This facilitates the reaction between the compounds.

Step a) of the process of the present invention may comprise the following sub-steps:

a1) contacting the phosphorous compound with the silane compound in presence of a radical initiator to produce a monomer, and
a2) contacting the monomer with water to produce the substituted silicon oligomers.

During sub-step a1), the phosphorous compound and the silane compound react according to a radical mechanism to produce the monomer. In particular, the labile P-H bond of the phosphorous compound having the above formulas (4a) and (4b), in particular being DOPO, can react with an unsaturated system such as the double bound C=C of the silane compound having the above formula (3), in particular VMDMS.

The monomer produced during sub-step a1) may have the following formula (5):

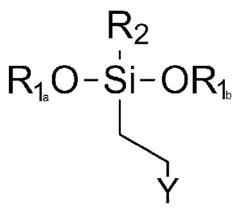

(5),

wherein

$R_{1a}$ and $R_{1b}$ are, independently from each other, H or a $C_1$-$C_6$ alkyl, in particular H, methyl or ethyl, more particularly methyl or ethyl,
$R_2$ is a $C_1$-$C_6$ alkyl, in particular $C_1$-$C_4$ alkyl, more particularly methyl, and
Y has one of the following formula (2a) or (2b), in particular the formula (2a):

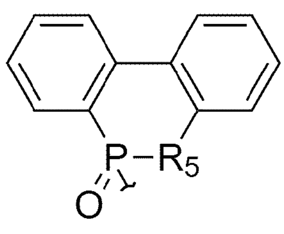

(2a)

wherein $R_5$ is $CH_2$ or O, in particular O,

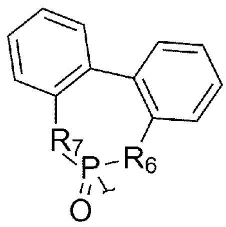

(2b)

wherein $R_6$ and $R_7$ are, independently from each other, $CH_2$ or O, in particular are O.

According to a particular embodiment, the monomer produced during sub-step a1) has the following formula (5):

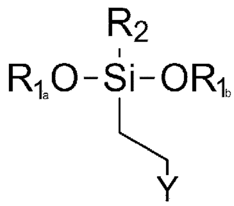

(5),

wherein

$R_{1a}$, $R_{1b}$, and $R_2$ are methyl, and
Y has the following formula (2a):

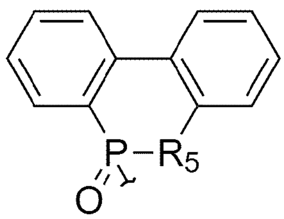

(2a)

wherein $R_5$ is O.

The molar ratio of phosphorous compound:silane compound at the beginning of sub-step a1) may be 1:99 to 99:1, in particular 25:75 to 75:25, more particularly is 1:1.

The radical initiator may, for example, be di-tert-butyl peroxide, benzoyl peroxide, tert-butyl peroxypivalate, tert-amyl peroxypivalate, tert-butyl peroxybenzoate or mixtures thereof, in particular tert-butyl peroxybenzoate.

A radical initiator of this list advantageously improves the yield and the kinetics of sub-step a1).

The molar percentage of radical initiator over the mixture of phosphorous compound and silane compound may be comprised between 0.1 mol% and 5 mol%, in particular between 0.5 mol% and 2 mol%, more particularly 0.95 mol% and 1.05 mol%.

A molar percentage of radical initiator in these ranges is low enough to produce the monomer during sub-step a1).

To further improve the yield and the kinetics of sub-step a1), said sub-step a1) may be performed at a temperature of 50°C to 200°C, in particular 100°C to 150°C, more particularly of 115°C to 125°C.

During sub-step a2), the substituted silicon oligomers is produced by the hydrolysis of the monomer that occurs through the nucleophilic attack of the oxygen atom of water on the silicon atom.

To accelerate the kinetics and increase the yield of sub-step a2), a catalyst may be used.

Accordingly, sub-step a2) may be carried out in presence of a catalyst, in particular an acid catalyst, a base catalyst, or mixtures thereof, more particular of a water solution comprising a base catalyst.

Trifluoroacetic acid is an example of acid catalyst which can be used in sub-step a2).

For example, the base catalyst of sub-step a2) may be KOH, NaOH, tetramethylguanidine, or mixtures thereof; in particular KOH, NaOH or mixtures thereof, more particularly KOH.

The water solution comprising a base catalyst may comprise between 1 wt.% and 10 wt.% of base catalyst, in particular from 2.5 wt.% to 7.5 wt.% of base catalyst, more particularly 4.5 wt.% to 5.5 wt.% of base catalyst.

The molar ratio of polyol:mixture of fatty acid and acid anhydride at the beginning of step b) may be 1:1 to 2:1, in particular 1.1:1 to 1.7:1, more particularly is 1.2:1 to 1.5:1.

To further improve the yield and the kinetics of step b), said step b) may be performed at a temperature of 100°C to 350°C, in particular 150°C to 300°C, more particularly of 200°C to 270°C.

Step c) may be performed at a temperature of 100°C to 250°C, in particular 150°C to 200°C, more particularly of 160°C to 170°C.

Step c) may be performed under inert atmosphere, in particular under nitrogen atmosphere, argon atmosphere or mixtures thereof.

Advantageously, performing step c) under inert atmosphere may prevent the yellowing of the covalently grafted alkyd-resin.

The covalently grafted alkyd resin of the present invention improves the flame retardancy properties of a paint composition. Therefore, the covalently grafted alkyd resin of the present invention may be used as a binder of a paint composition.

Accordingly, it is also proposed a flame retardant paint composition comprising the covalently grafted alkyd resin of the present invention as defined above.

For example, the flame retardant paint composition may comprise from 10 wt.% to 99 wt.%, in particular from 12 wt.% to 60 wt.%, more particularly from 30 wt.% to 50 wt.% of the covalently grafted alkyd resin of the present invention.

The flame retardant paint composition may also comprise a solvent, a charge, a pigment and an additive.

For example, the solvent may be water, white spirit, xylene or mixtures thereof.

Talc, calcium carbonate (CaCOs), kaolin, silica, feldspath, baryum sulfate, dolomite or mixtures thereof may be used as a charge.

The additive may be a drier, a wetting agent, a dispersing additive, a surface additive, a defoamer, a preservative, a rheology additive, a light stabilizer, a corrosion inhibitor, an anti-skinning agent, a leveling agent, a thickener or mixtures thereof.

Cobalt octoate, calcium octoate and zirconium octoate and mixtures thereof are examples of drier that may be used as additives in the paint composition of the present invention.

The skilled person knows how to adapt the amount of each element of the flame retardant paint composition of the present invention to obtain a satisfactory paint composition.

It is thus proposed the use of the flame retardant paint composition of the present invention as defined above, in fire protection of materials sensitive to combustion or loss of mechanical properties due to heat, in particular for wood application, metal application and plastics application.

The flame retardant paint composition of the present invention may, for instance, be used as topcoat for wood application, as topcoat for metal application, as topcoat for intumescent paint, as intumescent paints for wood application or as intumescent paints for metal application.

## Examples

### Materials

9,10-dihydro-9-oxa-10-phosphaphenanthrene-10-oxide (DOPO) was acquired from TCI.

Tall oil fatty acid (TOFA), pentaerythritol, phthalic anhydride, maleic anhydride, white spirit, mix of driers (a solution containing cobalt octoate, calcium octoate and zirconium octoate) were kindly supplied by Lixol (Groupe Berkem, Blanquefort, France). Vinylmethyldimethoxy silane (VMDMS), potassium hydroxide (KOH), t-butyl peroxybenzoate, p-toluenesulfonic acid (pTSA), chloroform ($CHCl_3$), xylene were purchased from Sigma Aldrich.

All reagents were used as received.

### Characterization

NMR spectroscopy

NMR samples were prepared with $CDCl_3$ as solvent and the analyses were performed using a Bruker Avance 500 MHz spectrometer. The structure of the substituted silicon oligomers was determined by hydrogen nuclear magnetic resonance ($^1H$ NMR), silicon nuclear magnetic resonance ($^{29}Si$ NMR) and phosphorus nuclear magnetic resonance ($^{31}P$ NMR). External references were timethylsilane (TMS) for $^1H$ and $^{29}Si$ NMR, and phosphoric acid ($H_3PO_4$) for $^{31}P$ NMR. Shifts were given in ppm. Diffusion ordered spectroscopy (DOSY) $^1H$ NMR was used to confirm the grafting of DOPO-VMDMS into alkyd resin and were performed on a Bruker Avance 600 MHz spectrometer with $CDCl_3$ as solvent.

The molecular weight of one repetition unit was determined by NMR thanks to the equation (1). A known mass of product and 1,3,5-trioxane were poured into a NMR tube and 500 μL of $CDCl_3$ were added. The NMR titrations were made in triplicate in order to have an average result. The molecular weight of one repetition unit was determined using equation (1) by comparing the integration value of the signals assigned to the 1,3,5-trioxane protons (5.12 ppm) with the integration of the signals arising from $Si\text{-}CH_3$ of the oligomer at -0.13 ppm.

$$Mw_{1\,unit} = \frac{\int Trioxane \times H_{Si-CH3}}{\int DOPO - VMDMS \times H_{Trioxane}} \times \frac{m_{DOPO-VMDMS}}{m_{Trioxane}} \times M_{Trioxane}$$

wherein

$Mw_{1\,unit}$ is the molecular weight of one repetition unit;
$\int_{Trioxane}$: is the integration of the signal from Trioxane protons;
$\int_{DOPO\text{-}VMDMS}$ is the integration of the signals from protons in $Si\text{-}CH_3$ signal of the substituted silicon oligomers;
$h_{Si\text{-}CH3}$ is the number of protons in $Si\text{-}CH_3$ of the substituted silicon oligomers signal;
$H_{Trioxane}$ is the number of trioxane protons;
$m_{DOPO\text{-}VMDMS}$: is the product mass;
$m_{Trioxane}$ it the trioxane mass;
$M_{Trioxane}$ is the trioxane molecular weight.

Fourier Transform Infrared Spectroscopy (FTIR)

The FTIR spectra were acquired on a ThermoScientific Nicolet iS50 FT-IR equipped with an attenuated total reflectance cell (ATR). The data were analyzed using the software OMNIC Series 8.2 from Thermo Scientific.

Acid values (AV)

Acid values were determined according to ISO 2114 standard. It is the mass of potassium hydroxide (KOH) in milligrams that is required to neutralize one gram of alkyd resin. Approximatively, 1 g of the reaction mixture was withdrawn and solubilized in a neutralizing solution (80/20 xylene/ethanol). The solution was then titrated with a KOH solution at 0.1 $mol.mL^{-1}$. Thanks to the following equation (2), the acid value was calculated.

$$AV = \frac{V_{KOH} \times M_{KOH} \times C_{KOH}}{m \times N.V.C.}$$

wherein

AV is the Acid Value;
$V_{KOH}$ is the volume of KOH solution introduced to neutralize the alkyd resin (mL);
$M_{KOH}$ is the molecular weight of KOH ($g.mol^{1}$);
$C_{KOH}$ is the concentration of KOH ($mol.mL^{-1}$);
m is the mass of alkyd resin withdraw (g); and
N.V.C. is the Non Volatile Content.

Size-exclusion chromatography (SEC)

Molecular weights of substituted silicon oligomers and alkyd resins were determined by SEC. SEC was recorded using a double detection GPC from Varian ProStar 210 pump. The detector was a Shodex refractive index detector. The system used two PL1113-6300 ResiPore 300 × 7.5 mm columns with dimethylformamide as the eluent with a flow rate of 0.8 $mL.min^{-1}$. The columns were thermostated at 70°C to obtain a suitable viscosity of DMF. Polymethylmethacrylate (PMMA) standards were used for calibration between 560 $g.mol^{-1}$ and 1 568 000 $g.mol^{-1}$. The typical sample concentration was 15 $mg.mL^{-1}$.

Cone calorimeter test

Flammability was studied using a cone calorimeter in order to investigate the fire behavior of paint composition

comprising either a conventional alkyd-resin (noted as "reference") or an alkyd-resin according to the present invention (noted as "according to the invention"). The pain compositions were applied on a wood sample (100*100*25 mm) in order to obtain a coating of 0.01 $g.cm^{-2}$. The samples were placed at 2.5 cm below a conic heater and isolated by rock wool. The samples were exposed to a 35 $kW.m^{-2}$ heat flux in well-ventilated conditions (air rate 24 $L.s^{-1}$) in the presence of a spark igniter to force the ignition. Heat release rate (HRR) was determined by oxygen depletion according to Huggett principle (1 kg of consumed oxygen corresponds to 13.1 MJ of heat released). Peak of Heat Release Rate (pHRR1) is the maximal value of the heat release rate reached just after the ignition.

The total heat released (THR) was obtained by integration of HRR curves.

**Example 1: synthesis and characterizations of a covalently grafted alkyd resin according to the invention.**

Example 1a: synthesis and characterizations of substituted silicon oligomers from VMDMS and DOPO.

In a three necked round bottom flask fitted with a condenser, a mechanical stirrer and a nitrogen inlet, 100.00 g (0.463 mol, 1 eq) of DOPO, 61.22 g (0.463 mol, 1 eq) of VMDMS and 0.90 g (4.63 mmol, 1 mol %) of tert butyl peroxybenzoate were added.
The reaction was carried out to 120°C during 4 hours. Then, 16.67 g (0.926 mol, 2 eq.) of a water solution of KOH (5 wt%) was added to the reaction mixture and carried out at 80°C for 2 hours. The organic phase was then extracted with 200 mL of chloroform 3 times. The organic phases were combined and dried with magnesium sulfate. Then, they were distilled under reduced pressure to give a white foam. The yield was 83%.

The white foam was analyzed by RMN spectroscopy, FTIR spectroscopy and SEC.

The results of the NMR spectroscopy are the following:

$^{31}P$ NMR (500 MHz, $CDCl_3$, ppm): δ: 39.9;
$^{1}H$ NMR (500 MHz, $CDCl_3$, ppm): δ: -0.42-0.17 (3H, $Si-CH_3$), 0.47-0.92 (2H, $Si-CH_2$), 1.69-2.20 (2H, $P-CH_2$), 7.04-8.09 (8H, aromatics);
$^{29}Si$ NMR (500 MHz, $CDCl_3$, ppm): δ: -21.9.

These results confirm the formation of substituted silicon oligomers.

The chemical structure of the substituted silicon oligomers are also confirmed by FTIR spectroscopy. Indeed, a peak around 3300 $cm^{-1}$ appears which confirms the formation of substituted silicon oligomers by the presence of -OH linked group.

The results from the SEC analyses shows that the repetitive unit of the substituted silicon oligomers have a molecular weight of 302 $g.mol^{-1}$ and that the number-average molecular weight of the substituted silicon oligomers is 1,200 $g.mol^{-1}$ with a dispersity of 1.3.

The results from the SEC analyses and from NMR spectroscopy shows an average degree of polymerization equal to 4.

Example 1b: Synthesis of tall oil fatty acid (TOFA) alkyd resin

A long oil TOFA alkyd resin was prepared by solvent process using TOFA, pentaerythritol, phthalic anhydride and maleic anhydride.

TOFA was firstly added in a five necked reactor flask equipped with a mechanical stirrer, a Dean Stark, a thermometer and a nitrogen inlet. Then, when the reaction reached 150°C, pentaerythritol was added, followed by phthalic anhydride and maleic anhydride at 200°C. Reaction mixture was heated to 220°C using xylene as azeotropic solvent to remove water. The reaction was continued until an acid value of 7 mg of KOH/g of resin was obtained. Xylene was removed by vacuum and then White Spirit was added in order to obtain a solid content of 75 wt%.

TOFA alkyd resins were synthetized in order to obtain a final hydroxy value around 55 KOH/g, which corresponded to the excess of -OH functions at the end of the synthesis.

Example 1c: Synthesis of the covalently grafted alkyd resins

In order to prepare the covalently grafted alkyd resins, the alkyd resin synthetized in Example 1b was reacted separately with 10, 20, 30 and 40 wt% of substituted silicon oligomers of Example 1a (which respectively represented around 1 wt% of P and Si, 2 wt% of P and Si, 3 wt% of P and Si and 4 wt% of P and Si).
The alkyd resin, substituted silicon oligomers and pTSA were added in a five necked reactor flask equipped with a mechanical stirrer, a condenser, a thermometer and a nitrogen inlet. The reaction was carried out at temperature 160-170°C under nitrogen atmosphere. In all cases (10, 20, 30 and 40 wt% of substituted silicon oligomers), samples

of the reaction mixture were periodically taken out and were monitored by the "clear on plate test". This consists on applying a drop of the samples of resin on a clean glass plate, and observing their clarity after evaporating the solvent. The reaction was carried out until a clear and transparent drop was obtained.

A sample of the reaction mixture at the end of the reaction was analyzed by DOSY NMR spectroscopy and SEC.

The formation of the covalently grafted alkyd resin is confirmed by DOSY NMR spectroscopy. The characteristic peak of DOPO-VMDMS oligomer ($Si-CH_3$) at -0.12 ppm exhibited the same diffusion coefficient as the alkyd resin, at -10 log ($m^2.s^{-1}$). Thus, the covalent bond between the alkyd resin and the substituted silicon oligomers is confirmed.

The number average molecular weight Mn of the covalently grafted alkyl resins was determined by SEC.

As presented in Table 1 below, Mn values increases with the amount of substituted silicon oligomer. Indeed, the substituted silicon oligomers was covalently grafted to the alkyd resins as a comb structure which increased the hydrodynamic volume and led to a higher molecular weight. Thereby, this increment is another indication of the bond formation between the alkyd resin and the substituted silicon oligomer.

[Table 1]

| Mass percentage of substituted silicon oligomers covalently grafted on the alkyd- resin | Mn ($g.mol^{-1}$) |
|---|---|
| 0 wt% (reference) | 4500 |
| 10 wt% | 5500 |
| 20 wt% | 6000 |
| 30 wt% | 6500 |

**Example 2: Characterization of the flame retardancy properties of paint composition comprising the covalently grafted alkyd resin synthesized in Example 1c.**

Two paint compositions, one according to the invention and one not according to the reference (noted as "reference" paint c omposition) are produced. Both paint compositions comprise:

15 wt% of pigments ($TiO_2$),
28% of charges (CaCOs, Kaolin),
8,45 wt% of solvent (White Spirit D60),
1,5 wt% of dryer (Octa-Soligen 141 Z),
0,75 wt% of a thickener (Bentone SD-1),
0,5 wt% of a wetting agent (DISPERBYK SD-1),
0,4 wt% of a defoamer (BYK 052-N),
0,4 wt% of anti-skinning agent (Borchi Nox 1640)

In addition:

- the paint composition according to the invention comprises 45 wt.% of the alkyd resin grafted with 30 wt.% of substituted silicon oligomers synthesized in Example 1c,

the "reference" paint composition comprises 45 wt.% of a conventional alkyd resin.

<u>Example 2c: cone calorimeter analyses</u>

The cone calorimeter analyses provide important information on the fire behavior of a material. The results are summarized in Table 2 exhibits the cone calorimeter curves of the paint composition "according to the invention" and the "reference" paint composition.

As shown by Table 2, pHRR1 and THR of the paint composition "according to the invention" are lower than pHRR1 and THR of the "reference" paint composition. Therefore, the flame retardancy properties of the paint composition "according to the invention" are better than the ones of the "reference" paint composition.

[Table 2]

| Samples | pHRR1 ($KW.m^{-2}$) | THR ($MJ.g^{-1}$) |
|---|---|---|
| Paint composition "according to the invention" | 134 | 7.2 |

(continued)

| Samples | pHRR1 ($KW.m^{-2}$) | THR ($MJ.g^{-1}$) |
|---|---|---|
| "reference" paint composition | 225 | 8.9 |

## Claims

1. An alkyd resin covalently grafted with silicon oligomers substituted with a phosphorus-containing substituent, wherein

   the mass percentage of silicon oligomers substituted with a phosphorus-containing substituent covalently grafted on the alkyd resin is 1 wt% to 40 wt% with respect to the total weight of the alkyd resin,
   the atomic ratio silicon:phosphorus of the silicon oligomers substituted with a phosphorus-containing substituent is comprised between 2:1 and 1:2, and
   the number average molecular weight (Mn) of the alkyd resin is comprised between 2 000 $g.mol^{-1}$ and 8 000 $g.mol^{-1}$, as determined in accordance with the method disclosed in the specification.

2. The alkyd resin according to claim 1 having the following formula (A):

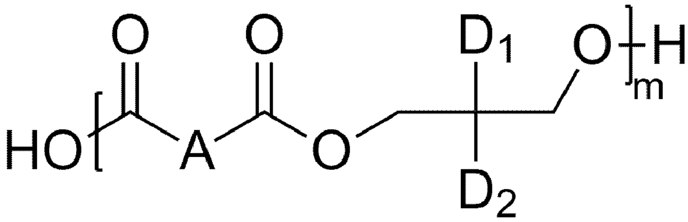

(A)

   wherein

   m is an integer,
   A is

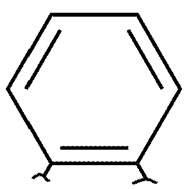

   or -CH=CH-,
   $D_1$ is -OH, $-OR_3$, $-CH_2-OH$ or $-CH_2-OR_3$,
   $D_2$, independently from $D_1$, is -H, -OH, $-OR_3$, $-CH_2-CH_3$, $-CH_2-OH$ or $-CH_2-OR_3$, and
   $R_3$ is independently chosen among the silicon oligomers substituted with a phosphorus-containing substituent and a derivative of a fatty acid.

3. The alkyd resin according to claim 1 or claim 2 having the following formula (B):

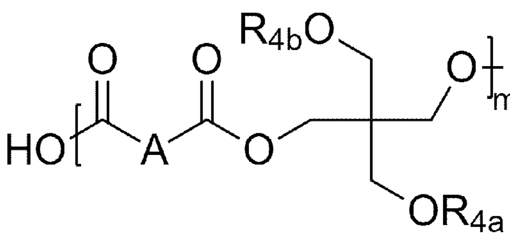

(B)

wherein

m is an integer,
A is

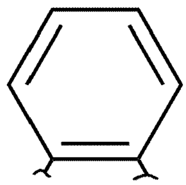

or -CH=CH-, and
$R_{4a}$ and $R_{4b}$ are, independently from each other, chosen among -H, the silicon oligomers substituted with a phosphorus-containing substituent and a derivative of a fatty acid.

**4.** The alkyd resin according to any one of claims 1 to 3, wherein

the silicon oligomers substituted with a phosphorus-containing substituent has the following formula (1):

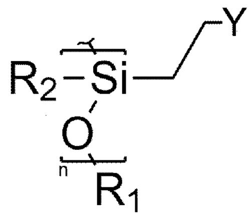

(1)

wherein
$R_1$ is H or a $C_1$-$C_6$ alkyl
$R_2$ is a $C_1$-$C_6$ alkyl,
n is an integer between 2 and 20,
Y has one of the following formula (2a) or (2b):

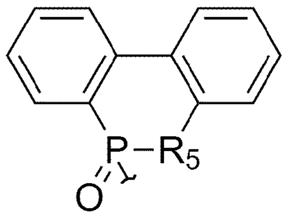

(2a)

wherein $R_5$ is $CH_2$ or O, or

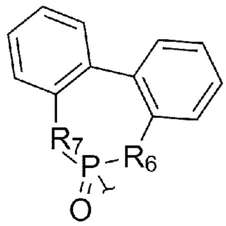

(2b)

wherein $R_6$ and $R_7$ are, independently from each other, $CH_2$ or O, and
the derivative of a fatty acid is a derivative of palmitate, stearate, oleate, linoleate, gamma-linoleate or linolenate.

**5.** A process for producing an alkyd resin as defined in any one of claims 1 to 4 comprising the following steps:

a) contacting a phosphorous compound with a silane compound to produce silicon oligomers substituted with a phosphorus-containing substituent, and
b) contacting a polyol, an acid anhydride and a fatty acid to produce an alkyd resin, and
c) contacting the silicon oligomers produced in step a) with the alkyd resin produced in step b) to produce the alkyd resin,

wherein the acid anhydride is phthalic anhydride, maleic anhydride or mixtures thereof.

**6.** The process according to claim 5, wherein:

the silane compound has the following formula (3):

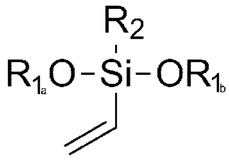
(3)

wherein
$R_{1a}$ and $R_{1b}$ are, independently from each other, H or a $C_1$-$C_6$ alkyl,
$R_2$ is a $C_1$-$C_6$ alkyl,
the phosphorous compound has the following formula (4a) or (4b):

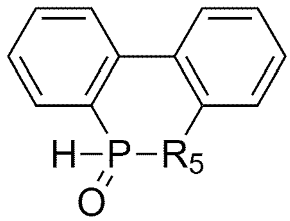
(4a)

wherein $R_5$ is $CH_2$ or O,

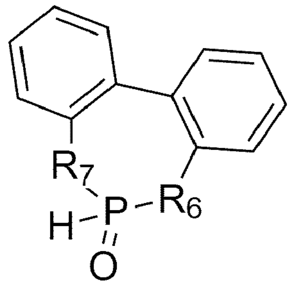
(4b)

wherein $R_6$ and $R_7$ are, independently from each other, $CH_2$ or O,
the polyol is glycerol, trimethylolpropane, pentaerythritol or mixtures thereof,
the fatty acid is palmitic acid, stearic acid, oleic acid, linoleic acid, gamma-linoleic acid, linolenic acid or mixtures thereof.

**7.** The process according to claim 5 or claim 6, wherein:

the silane compound is vinylmethyldimethoxy silane, and
the phosphorous compound is 9,10-dihydro-9-oxa-10- phosphaphenanthrene-10-oxide.

**8.** The process according to any one of claims 5 to 7 wherein step a) of the process of the present invention comprises the following sub-steps:

a1) contacting the phosphorous compound with the silane compound in presence of a radical initiator to produce a monomer, and
a2) contacting the monomer with water to produce the substituted silicon oligomers.

**9.** The process according to claim 8 wherein the radical initiator is di-tert-butyl peroxide, benzoyl peroxide, tert-butyl peroxypivalate, tert-amyl peroxypivalate, tert-butyl peroxybenzoate or mixtures thereof.

**10.** The process according to claim 8 or 9, wherein the molar percentage of radical initiator over the mixture of phosphorous compound and silane compound is comprised between 0.1 mol% and 5 mol%.

**11.** The process according to any one of claim 5 to 10, wherein the step c) is performed at a temperature of 100°C to 250°C.

**12.** The process according to any one of claim 5 to 11, wherein the step c) is performed under inert atmosphere.

**13.** A flame retardant paint composition comprising the alkyd resin as defined in any one of claims 1 to 4 or obtainable by the process as defined in any one of claim 5 to 12.

**14.** Use of the flame retardant paint composition as defined in claim 13 in fire protection.

**Patentansprüche**

**1.** Alkydharz, das kovalent mit Silicium-Oligomeren gepfropft ist, die mit einem Phosphor-enthaltenden Substituenten substituiert sind,
wobei

der Massenprozentsatz an Silicium-Oligomeren, die mit einem Phosphor-enthaltenden Substituenten substituiert sind, die kovalent auf das Alkydharz gepfropft sind, 1 Gew.-% bis 40 Gew.-%, in Bezug auf das Gesamtgewicht des Alkydharzes, beträgt,
das Atomverhältnis Silicium:Phosphor der mit einem Phosphor-enthaltenden Substituenten substituierten Silicium-Oligomere zwischen 2:1 und 1:2 umfasst, und
das Zahlenmittel des Molekulargewichts (Mn) des Alkydharzes zwischen 2 000 $g.mol^{-1}$ und 8 000 $g.mol^{-1}$ umfasst, wie in Übereinstimmung mit dem in der Beschreibung offenbarten Verfahren bestimmt.

**2.** Alkydharz nach Anspruch 1 mit der folgenden Formel (A):

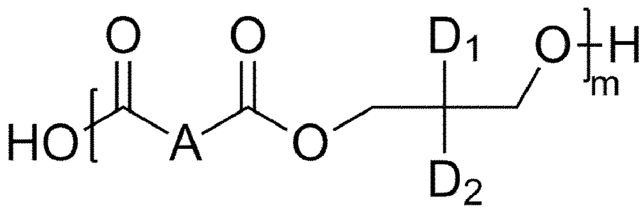

(A)

wobei

m eine ganze Zahl ist,
A

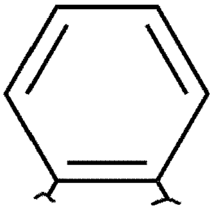

oder -CH=CH- ist,

$D_1$ -OH, $-OR_3$, $-CH_2-OH$ oder $-CH_2-OR_3$ ist,

$D_2$, unabhängig von $D_1$, -H, -OH, $-OR_3$, $-CH_2-CH_3$, $-CH_2-OH$ oder $-CH_2-OR_3$ ist, und

$R_3$ unabhängig ausgewählt ist aus den Silicium-Oligomeren substituiert mit einem Phosphor-enthaltenden Substituenten und einem Fettsäurederivat.

**3.** Alkydharz nach Anspruch 1 oder Anspruch 2 mit der folgenden Formel (B):

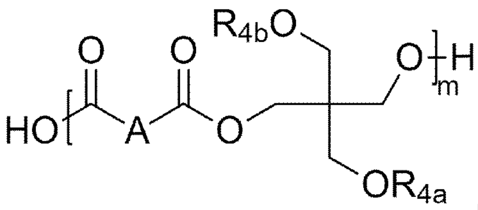

(B)

wobei

m eine ganze Zahl ist,

A

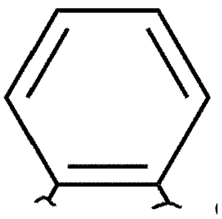

oder -CH=CH- ist, und

$R_{4a}$ und $R_{4b}$ unabhängig voneinander ausgewählt sind aus den Silicium-Oligomeren substituiert mit einem Phosphor-enthaltenden Substituenten und einem Fettsäurederivat.

**4.** Alkydharz nach einem der Ansprüche 1 bis 3, wobei die mit einem Phosphor-enthaltenden Substituenten substituierten Silicium-Oligomere die folgende Formel (1 ) aufweisen:

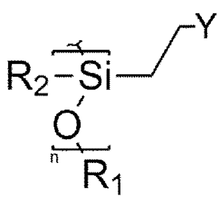

(1)

wobei

$R_1$ H oder $C_1$-$C_6$ alkyl ist,

$R_2$ ein $C_1$-$C_6$ alkyl ist,

n eine ganze Zahl zwischen 2 und 20 ist,

Y eines der folgenden Formeln (2a) und (2b) hat:

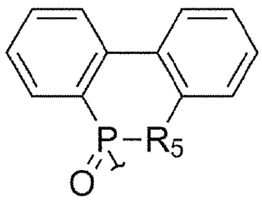

(2a)

wobei $R_5$ $CH_2$ oder O oder

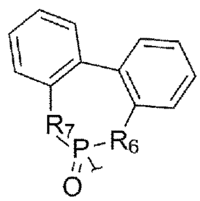

(2b)

ist, wobei $R_6$ und $R_7$ unabhängig voneinander $CH_2$ oder O sind, und das Derivat einer Fettsäure ein Derivat von Palmitat, Stearat, Oleat, Linoleat, Gamma-Linoleat oder Linolenat ist.

**5.** Verfahren zur Herstellung eines Alkydharzes wie in einem der Ansprüche 1 bis 4 definiert, umfassend die folgenden Schritte:

a) Inkontaktbringen einer Phosphorverbindung mit einer Silanverbindung, um Silicium-Oligomere herzustellen, die mit einem Phosphor-enthaltenden Substituenten substituiert sind, und
b) Inkontaktbringen eines Polyols, eines Säureanhydrids und einer Fettsäure, um ein Alkydharz herzustellen, und
c) Inkontaktbringen der in Schritt a) hergestellten Silicium-Oligomere mit dem in Schritt b) hergestellten Alkydharz, um das Alkydharz herzustellen, wobei das Säureanhydrid Phthalsäureanhydrid, Maleinsäureanhydrid oder Mischungen davon ist.

**6.** Verfahren nach Anspruch 5, wobei:

die Silanverbindung die folgende Formel (3) hat:

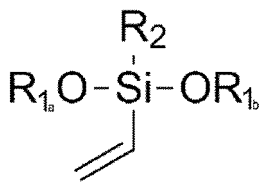

(3)

wobei
$R_{1a}$ und $R_{1b}$ unabhängig voneinander H oder ein $C_1$-$C_6$ alkyl sind,
$R_2$ ein $C_1$-$C_6$ alkyl ist,
die Phosphorverbindung die folgende Formel (4a) oder (4b) hat:

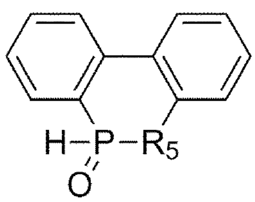

(4a)

wobei $R_5$ $CH_2$ oder O, oder

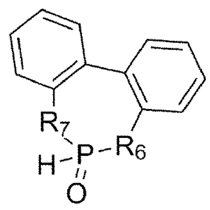

(4b)

ist, wobei $R_6$ und $R_7$ unabhängig voneinander $CH_2$ oder O sind, das Polyol Glycerin, Trimethylolpropan, Pentaerythritol oder Mischungen davon ist, die Fettsäure Palmitinsäure, Stearinsäure, Ölsäure, Linolsäure, Gamma-Linolensäure, Linolensäure oder Mischungen davon ist.

**7.** Verfahren nach Anspruch 5 oder 6, wobei: die Silanverbindung Vinylmethyldimethoxysilan ist und die Phosphorverbindung 9,10-Dihydro-9-oxa-10-phosphaphenanthren-10-oxid ist.

**8.** Verfahren nach einem der Ansprüche 5 bis 7, wobei Schritt a) des Verfahrens der vorliegenden Erfindung die folgenden Teilschritte umfasst:

a1) Inkontaktbringen der Phosphorverbindung mit der Silanverbindung in Gegenwart eines Radikalinitiators zur Herstellung eines Monomers, und
a2) Inkontaktbringen des Monomers mit Wasser zur Herstellung der substituierten Silicium-Oligomere.

**9.** Verfahren nach Anspruch 8, wobei der Radikalinitiator Di-tert-butylperoxid, Benzoylperoxid, tert-Butylperoxypivalat, tert-Amylperoxypivalat, tert-Butylperoxybenzoat oder Mischungen davon ist.

**10.** Verfahren nach Anspruch 8 oder 9, wobei der molare Anteil des Radikalinitiators an der Mischung aus Phosphorverbindung und Silanverbindung zwischen 0,1 Mol-% und 5 Mol-% liegt.

**11.** Verfahren nach einem der Ansprüche 5 bis 10, wobei der Schritt c) bei einer Temperatur von 100°C bis 250°C durchgeführt wird.

**12.** Verfahren nach einem der Ansprüche 5 bis 11, wobei der Schritt c) unter inerter Atmosphäre durchgeführt wird.

**13.** Flammhemmende Farbzusammensetzung, umfassend das Alkydharz, wie in einem der Ansprüche 1 bis 4 definiert, oder erhältlich durch das Verfahren, wie in einem der Ansprüche 5 bis 12 definiert.

**14.** Verwendung der flammhemmenden Farbzusammensetzung nach Anspruch 13 im Brandschutz.

## Revendications

**1.** Résine alkyde greffée de manière covalente avec des oligomères de silicium substitués avec un substituant contenant du phosphore,
dans laquelle

le pourcentage massique des oligomères de silicium substitués avec un substituant contenant du phosphore greffés de manière covalente sur la résine alkyde est de 1 % en poids à 40 % en poids par rapport au poids total de la résine alkyde,
le rapport atomique silicium:phosphore des oligomères de silicium substitués avec un substituant contenant du phosphore est compris entre 2:1 et 1:2, et
le poids moléculaire moyenne en nombre (Mn) de la résine alkyde est compris entre 2 000 $g.mol^{-1}$ et 8 000 $g.mol^{-1}$, tel que déterminé selon le procédé divulgué dans la description.

**2.** Résine alkyde selon la revendication 1 ayant la formule (A) suivante :

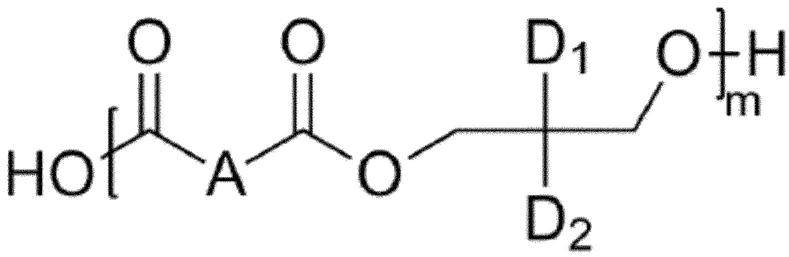

(A)

dans laquelle

m est un nombre entier,
A est

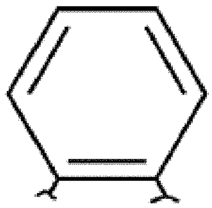

ou -CH=CH-,
$D_1$ est -OH, -$OR_3$, -$CH_2$-OH ou -$CH_2$-$OR_3$,
$D_2$, indépendamment de $D_1$, est -H, -OH, -$OR_3$, -$CH_2$-$CH_3$, -$CH_2$-OH ou -$CH_2$-$OR_3$, et
$R_3$ est choisi indépendamment parmi les oligomères de silicium substitués avec un substituant contenant du phosphore et un dérivé d'un acide gras.

3. Résine alkyde selon la revendication 1 ou la revendication 2 ayant la formule (B) suivante :

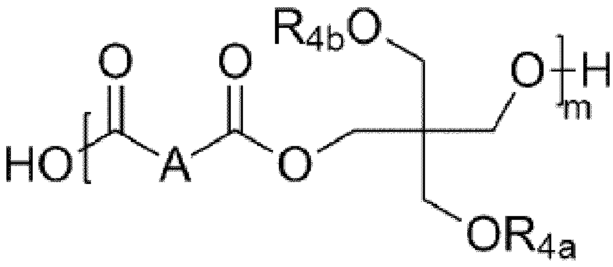

(B)

dans laquelle

m est un nombre entier,
A est

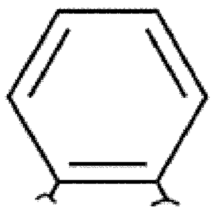

ou -CH=CH-, et
$R_{4a}$ et $R_{4b}$ sont, indépendamment l'un de l'autre, choisis parmi -H, les oligomères de silicium substitués avec un substituant contenant du phosphore et un dérivé d'un acide gras.

**4.** Résine alkyde selon l'une quelconque des revendications 1 à 3, dans laquelle

les oligomères de silicium substitués avec un substituant contenant du phosphore possèdent la formule (1) suivante :

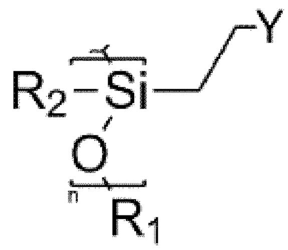

(1)

dans laquelle
$R_1$ est H ou un alkyle en $C_1$-$C_6$
$R_2$ est un alkyle en $C_1$-$C_6$,
n est un nombre entier entre 2 et 20,
Y possède l'une des formules (2a) ou (2b) suivantes :

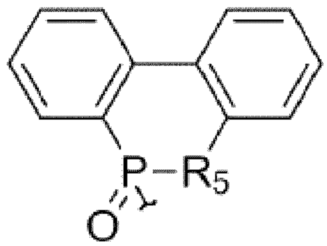

(2a)

dans laquelle $R_5$ est $CH_2$ ou O, ou

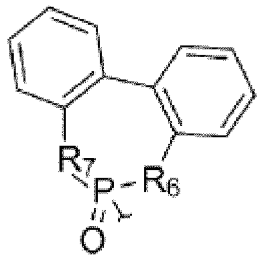

(2b)

dans laquelle $R_6$ et $R_7$ sont, indépendamment l'un de l'autre, $CH_2$ ou O, et le dérivé d'un acide gras est un dérivé de palmitate, de stéarate, d'oléate, de linoléate, de gamma-linoléate ou de linolénate.

**5.** Procédé de production d'une résine alkyde telle que définie dans l'une quelconque des revendications 1 à 4, comprenant les étapes suivantes :

a) la mise en contact d'un composé phosphoré avec un composé de silane pour produire des oligomères de silicium substitués avec un substituant contenant du phosphore, et
b) la mise en contact d'un polyol, d'un anhydride d'acide et d'un acide gras pour produire une résine alkyde, et
c) la mise en contact des oligomères de silicium produits dans l'étape a) avec la résine alkyde produite dans l'étape b) pour produire la résine alkyde,

dans lequel l'anhydride d'acide est l'anhydride phtalique, l'anhydride maléique ou des mélanges de ceux-ci.

**6.** Procédé selon la revendication 5, dans lequel :

le composé de silane possède la formule (3) suivante :

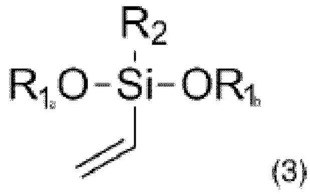

(3)

dans lequel
$R_{1a}$ et $R_{1b}$ sont, indépendamment l'un de l'autre, H ou un alkyle en $C_1$-$C_6$,
$R_2$ est un alkyle en $C_1$-$C_6$,
le composé phosphoré possède la formule (4a) ou (4b) suivante :

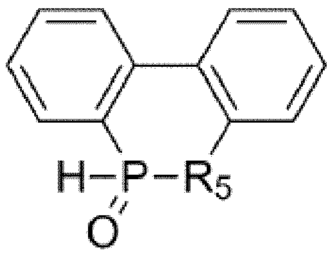

(4a)

dans lequel $R_5$ est $CH_2$ ou O,

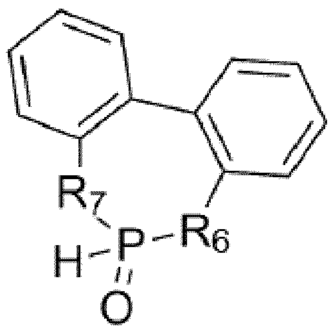

(4b)

dans lequel $R_6$ et $R_7$ sont, indépendamment l'un de l'autre, $CH_2$ ou O,
le polyol est le glycérol, le triméthylolpropane, le pentaérythritol ou des mélanges de ceux-ci,
l'acide gras est l'acide palmitique, l'acide stéarique, l'acide oléique, l'acide linoléique, l'acide gamma-linoléique, l'acide linolénique ou des mélanges de ceux-ci.

**7.** Procédé selon la revendication 5 ou la revendication 6, dans lequel :

le composé de silane est le vinylméthyldiméthoxysilane, et
le composé phosphoré est le 9,10-dihydro-9-oxa-10-phosphaphénanthrène-10-oxyde.

**8.** Procédé selon l'une quelconque des revendications 5 à 7, dans lequel l'étape a) du procédé de la présente invention comprend les sous-étapes suivantes :

a1) la mise en contact du composé phosphoré avec le composé de silane en présence d'un initiateur de radicaux pour produire un monomère, et
a2) la mise en contact du monomère avec de l'eau pour produire les oligomères de silicium substitués.

**9.** Procédé selon la revendication 8, dans lequel l'initiateur de radicaux est le peroxyde de di-*tert*-butyle, le peroxyde de benzoyle, le peroxypivalate de *tert*-butyle, le peroxypivalate de *tert*-amyle, le peroxybenzoate de *tert*-butyle ou des mélanges de ceux-ci.

**10.** Procédé selon la revendication 8 ou 9, dans lequel le pourcentage molaire d'initiateur de radicaux par rapport au mélange de composé phosphoré et de composé de silane est compris entre 0,1 % en mole et 5 % en mole.

**11.** Procédé selon l'une quelconque des revendications 5 à 10, dans lequel l'étape c) est réalisée à une température de 100 °C à 250 °C.

**12.** Procédé selon l'une quelconque des revendications 5 à 11, dans lequel l'étape c) est réalisée sous atmosphère inerte.

**13.** Composition de peinture ignifuge comprenant la résine alkyde telle que définie dans l'une quelconque des revendications 1 à 4 ou pouvant être obtenue par le procédé tel que défini dans l'une quelconque des revendications 5 à 12.

**14.** Utilisation de la composition de peinture ignifuge telle que définie dans la revendication 13 dans la protection contre les incendies.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 103333327 A